# EUROPÄISCHE PATENTSCHRIFT

(11) **EP 3 631 758 B1**
(45) Veröffentlichungstag und Bekanntmachung des Hinweises auf die Patenterteilung: **14.04.2021**
(21) Anmeldenummer: 18720606.5
(22) Anmeldetag: 27.04.2018
(51) Int. Cl.: G06T 7/593, G06T 3/00

(54) **STEUEREINRICHTUNG FÜR EINE KAMERAVORRICHTUNG, KAMERAANORDNUNG UND VERFAHREN ZUR STEREOSKOPISCHEN AUFNAHME EINES ÜBERWACHUNGSBEREICHS**
CONTROL DEVICE FOR A CAMERA APPARATUS, CAMERA ARRANGEMENT AND METHOD FOR THE STEREOSCOPIC RECORDING OF A MONITORING AREA
MOYEN DE COMMANDE POUR UN DISPOSITIF DE CAMÉRA, AGENCEMENT DE CAMÉRA ET PROCÉDÉ D'ENREGISTREMENT STÉRÉOSCOPIQUE D'UNE ZONE DE SURVEILLANCE

(30) Priorität: 22.05.2017 DE 102017208607
(43) Veröffentlichungstag der Anmeldung: 08.04.2020
(73) Patentinhaber: Robert Bosch GmbH, 70442 Stuttgart (DE)
(72) Erfinder: MEYER, Michael, 31079 Sibbesse (DE)
(86) Internationale Anmeldenummer: PCT/EP2018/060855
(87) Internationale Veröffentlichungsnummer: WO 2018/215166

(56) Entgegenhaltungen:
- BEDAT L ET AL: "Low bit-rate codec based on LAR method for video surveillance via Internet", 2000 10TH EUROPEAN SIGNAL PROCESSING CONFERENCE, IEEE, 4. September 2000 (2000-09-04), Seiten 1-4, XP032756258, ISBN: 978-952-15-0443-3 [gefunden am 2015-03-31]
- DEFORGES O ET AL: "Region of interest coding for low bit rate image transmission", MULTIMEDIA AND EXPO, 2000. ICME 2000. 2000 IEEE INTERNATIONAL CONFEREN CE ON NEW YORK, NY, USA 30 JULY-2 AUG. 2000, PISCATAWAY, NJ, USA,IEEE, US, Bd. 1, 30. Juli 2000 (2000-07-30), Seiten 107-110, XP010511413, DOI: 10.1109/ICME.2000.869556 ISBN: 978-0-7803-6536-0

## Beschreibung

### Stand der Technik

Die Erfindung betrifft eine Steuereinrichtung für eine Kameravorrichtung zur stereoskopischen Aufnahme eines Überwachungsbereichs mit Objekten.

Aus der Videoüberwachungstechnik sind Stereokameras bekannt, die eine Tiefenmessung ermöglichen. Solche Kameras werden zum Beispiel eingesetzt, um Hindernisse zu erkennen. Bei der Tiefenschätzung mit Stereokameras steigt einerseits die Genauigkeit der Messung mit der Bildauflösung der verwendeten Bildaufnehmer. Andererseits steigt mit der Bildauflösung aber auch die notwendige Rechenleistung.

Die Druckschrift DE 10 2008 001 076 A1, die wohl den nächstkommenden Stand der Technik bildet, beschreibt ein Verfahren zur Auflösungsreduktion eines Eingangsbildes, wobei das Eingangsbild eine durch eine Überwachungskamera aufgenommene Szene zeigt. Das Verfahren ist dadurch gekennzeichnet, dass die Auflösungsreduktion unter Berücksichtigung der Gegenstandsweite in der Szene und/oder der perspektivischen Verzerrung der dreidimensionalen Szene angepasst wird.

### Offenbarung der Erfindung

Im Rahmen der Erfindung wird eine Steuereinrichtung für eine Kameravorrichtung mit den Merkmalen des Anspruchs 1 vorgeschlagen. Ferner wird eine Kameraanordnung mit den Merkmalen des Anspruchs 11 sowie ein Verfahren zur stereoskopischen Aufnahme des Überwachungsbereichs mit den Merkmalen des Anspruchs 12 vorgeschlagen. Bevorzugte und/oder vorteilhafte Ausführungsformen der Erfindung ergeben sich aus den Unteransprüchen, der nachfolgenden Beschreibung sowie den beigefügten Figuren.

Erfindungsgemäß wird eine Steuereinrichtung für eine Kameravorrichtung zur stereoskopischen Aufnahme eines Überwachungsbereichs mit Objekten vorgeschlagen. Die Steuereinrichtung ist zur Ansteuerung, Bedienung und/oder Verwendung der Kameravorrichtung und/oder einer Mehrzahl von Kameravorrichtungen ausgebildet. Die Kameravorrichtung ist zur stereoskopischen Aufnahme des Überwachungsbereichs ausgebildet. Die stereoskopische Aufnahme ist insbesondere eine 3D-Bildaufnahme oder eine 3D-Auswertung des Überwachungsbereichs. Insbesondere ist die stereoskopische Aufnahme als eine dreidimensionale Auswertung und/oder Aufnahme des Überwachungsbereichs zu verstehen. In dem Überwachungsbereich ist ein Objekt oder eine Mehrzahl an Objekten angeordnet. Der Überwachungsbereich ist vorzugsweise ein Teilbereich eines Überwachungsgebietes. Der Überwachungsbereich und/oder das Überwachungsgebiet ist beispielsweise eine Freifläche oder ein Innenbereich, im Speziellen ein Flughafen, ein Bahnhof oder ein sicherheitstechnisch relevanter Bereich.

Die Kameravorrichtung umfasst eine erste Kameraeinheit und eine zweite Kameraeinheit. Erste Kameraeinheit und zweite Kameraeinheit können als separate Kameras ausgebildet sein. Alternativ und/oder ergänzend sind die erste Kameraeinheit und die zweite Kameraeinheit als Bildaufnahmesensoren in der Kameravorrichtung, beispielsweise einem gemeinsamen Gehäuse, ausgebildet. Die erste Kameraeinheit und die zweite Kameraeinheit sind vorzugsweise Kameras und/oder Bildaufnahmesensoren zur Aufnahme eines Farbbildes, eines Schwarz-Weiß-Bildes, eines Videos oder eines Einzelbildes.

Die erste Kameraeinheit ist ausgebildet, ein erstes Überwachungsbild des Überwachungsbereiches aufzunehmen. Das Überwachungsbild ist insbesondere ein 2D-Bild des Überwachungsbereiches. Die zweite Kameraeinheit ist ausgebildet, ein zweites Überwachungsbild aufzunehmen, wobei das zweite Überwachungsbild den Überwachungsbereich zeigt. Erstes Überwachungsbild und zweites Überwachungsbild weisen insbesondere einen Überlappbereich auf, wobei dieser Überlappbereich einen gemeinsamen Bereich des Überwachungsbereiches zeigt. Insbesondere werden erstes Überwachungsbild und zweites Überwachungsbild zu einem gleichen Zeitpunkt aufgenommen. Alternativ wird erstes Überwachungsbild und zweites Überwachungsbild zeitversetzt aufgenommen.

Die Kameravorrichtung ist ausgebildet, das erste Überwachungsbild und das zweite Überwachungsbild der Steuereinrichtung bereitzustellen. Insbesondere sind Kameravorrichtung und Steuereinrichtung datentechnisch zur Übergabe des ersten Überwachungsbildes und des zweiten Überwachungsbildes verbunden. Die datentechnische Verbindung zwischen Kameravorrichtung und Steuereinrichtung kann eine kabelgebundene Verbindung sein oder eine kabellose Verbindung, wie beispielsweise eine Funkverbindung. Insbesondere sind erstes Überwachungsbild und zweites Überwachungsbild datentechnisch speicherbar und/oder hinterlegbar in der Steuereinrichtung.

Der Abstand zwischen erster Kameraeinheit und einem Objekt im Überwachungsbereich sowie der Abstand zwischen zweiter Kameraeinheit und dem Objekt im Überwachungsbereich wird jeweils als Gegenstandsweite bezeichnet. Für eine Mehrzahl an Objekten im Überwachungsbereich finden sich jeweils eine Mehrzahl an Gegenstandsweiten für erste und zweite Kameraeinheit. Insbesondere ist der Abstand zwischen Kameraeinheit und Objekt der Abstand von Bildebene der Kameraeinheit und Objekt im Überwachungsbereich.

Die erste Kameraeinheit und die zweite Kameraeinheit sind vorzugsweise beabstandet zueinander angeordnet, sodass sich für ein im Überwachungsbereich befindliches Objekt zwei unterschiedliche Gegenstandsweiten für die erste Kameraeinheit und die zweite Kameraeinheit ergeben. Insbesondere ist der Überwachungsbereich in Abschnitte gliederbar, wobei diese Abschnitte auch als Objekte des Überwachungsbereichs auffassbar sind, sodass sich für die Abschnitte des Überwachungsbereichs unterschiedliche Gegenstandsweiten ergeben können.

Die Steuereinrichtung weist ein Verarbeitungsmodul auf. Das Verarbeitungsmodul ist insbesondere ein Datenverarbeitungsmodul. Beispielsweise ist das Verarbeitungsmodul eine Rechnereinheit, ein Mikroprozessor oder ein Mikrocontroller. Das Verarbeitungsmodul ist ausgebildet, das erste Überwachungsbild zu einem ersten reduzierten Bild zu verarbeiten. Ferner ist das Verarbeitungsmodul ausgebildet, das zweite Überwachungsbild zu einem zweiten reduzierten Bild zu verarbeiten. Insbesondere weist das erste reduzierte Bild eine geringere Gesamtauflösung auf als das erste Überwachungsbild, wobei das zweite reduzierte Bild eine geringere Gesamtauflösung als das zweite Überwachungsbild aufweist. Insbesondere ist das Verarbeitungsmodul ausgebildet, das erste reduzierte Bild durch eine abschnittsweise Reduktion der Auflösung des ersten Überwachungsbildes aus dem ersten Überwachungsbild zu erzeugen. Ferner ist das Verarbeitungsmodul ausgebildet, das zweite reduzierte Bild durch eine abschnittsweise Auflösungsreduktion des zweiten Überwachungsbildes aus dem zweiten Überwachungsbild zu erzeugen.

Das erste reduzierte Bild weist einen auflösungsstarken Abschnitt und einen auflösungsschwachen Abschnitt auf. Ebenso weist das zweite reduzierte Bild einen auflösungsstarken Abschnitt und einen auflösungsschwachen Abschnitt auf. Insbesondere ist es möglich, dass erstes reduziertes Bild und zweites reduziertes Bild eine Mehrzahl an auflösungsstarken Abschnitt und/oder auflösungsschwachen Abschnitten aufweisen. Der auflösungsschwache Abschnitt ist insbesondere jeweils ein flächiger Bereich im reduzierten Bild. Ebenso ist insbesondere der auflösungsstarke Abschnitt vorzugsweise ein flächiger Bereich im reduzierten Bild. Beispielsweise ist es möglich, dass auflösungsstarker Abschnitt und auflösungsschwacher Abschnitt kontinuierlich ineinander übergehen, alternativ geht der auflösungsstarke Abschnitt in den auflösungsschwachen Abschnitt abrupt über.

Der auflösungsstarke Abschnitt des ersten reduzierten Bildes und/oder des zweiten reduzierten Bildes zeigt jeweils ein Abschnitt des ersten Überwachungsbildes und/oder des zweiten Überwachungsbildes, der einen Fernbereich des abgebildeten Überwachungsbereichs zeigt. Der Fernbereich ist ein Bereich des Überwachungsbereichs, der weiter entfernt von der Kameraeinheit ist als ein einstellbarer und/oder eingestellter Grenzgegenstandsbereich. Der Grenzgegenstandsbereich kann linienförmig oder flächig sein, insbesondere weist der Grenzgegenstandsbereich einen maximalen und einen minimalen Abstand auf, wobei maximal und minimaler Abstand insbesondere maximale und minimale Gegenstandsweite des Grenzgegenstandsbereichs ist. Ein linienförmiger Grenzgegenstandsbereich ist im Speziellen eine Grenzgegenstandsweite. Bereiche und/oder Abschnitte des Überwachungsbereichs, die näher an der Kameraeinheit sind als der Grenzgegenstandsbereich und/oder die Grenzgegenstandsweite, bilden einen Nahbereich des Überwachungsbereichs. Der auflösungsschwache Abschnitt des reduzierten Bildes zeigt jeweils ein Abschnitt des Überwachungsbildes und/oder ein Abschnitt des reduzierten Bildes, der einen Nahbereich des Überwachungsbereichs zeigt.

Als Auflösung wird insbesondere die Pixelanzahl und/oder die Anzahl an Bildpunkten eines Bildes verstanden, beispielsweise die Bildpunkte pro Bild, die Bildpunkte pro Zeile und/oder die Bildpunkte pro Spalte. Die Auflösung umfasst insbesondere die Farbtiefe, sodass eine Reduktion der Auflösung einer Reduktion der Farbtiefe des Bildes entsprechen kann. Ferner betrifft die Reduktion der Auflösung die Reduktion der Bildpunkte des Bildes, beispielsweise die Anzahl der Bildpunkte pro Zeile und/oder die Anzahl der Bildpunkte pro Spalte

Die Steuereinrichtung weist ein Auswertemodul zur stereoskopischen Auswertung des Überwachungsbereichs basierend auf dem ersten reduzierten Bild und dem zweiten reduzierten Bild auf. Insbesondere ist das Auswertemodul Teil des Verarbeitungsmoduls. Im Speziellen ist das Auswertemodul eine Rechnereinheit, ein Mikroprozessor oder eine Mikrocontrollereinheit. Basierend auf dem ersten reduzierten Bild und dem zweiten reduzierten Bild ist das Auswertemodul insbesondere ausgebildet, Abstände und/oder Entfernungen im abgebildeten Überwachungsbereich zu bestimmen und/oder abzuschätzen. Insbesondere ist es möglich, Abstände und/oder Entfernungen des abgebildeten Überwachungsbereichs und/oder zwischen Objekten des Überwachungsbereichs im Dreidimensionalen zu bestimmen.

Es ist eine Überlegung der Erfindung, eine Steuereinrichtung für eine Kameravorrichtung bereitzustellen, bei der nur in einem kleinen Bereich des aufgenommenen Bildes in einer vollen Auflösung gerechnet wird und/oder ausgewertet wird, ohne dass eine geforderte Messgenauigkeit unterschritten wird. Die vorliegende Erfindung schlägt dazu eine Steuereinrichtung vor, bei der die Genauigkeit in den relevanten Bildbereichen bewahrt wird, aber gleichzeitig die erforderliche Rechenleistung erheblich reduziert wird.

In einer besonders bevorzugten Ausgestaltung der Erfindung, weist die Steuereinrichtung ein Eingabemodul zur Eingabe des Grenzgegenstandsbereichs und/oder Grenzgegenstandsweite auf. Insbesondere ist das Eingabemodul zur numerischen, alphanumerischen oder grafischen Eingabe des Grenzgegenstandsbereichs und/oder der Grenzgegenstandsweite ausgebildet. Beispielsweise ist das Eingabemodul eine Computertastatur, ein Touchpad oder eine Computermaus. Dieser Ausgestaltung liegt die Überlegung zugrunde, eine besonders einfach einstellbare Steuereinrichtung bereitzustellen.

In einer möglichen Ausgestaltung der Erfindung, weist das Eingabemodul eine Anzeigeeinheit zur Anzeige des ersten Überwachungsbildes und/oder zur Anzeige des zweiten Überwachungsbildes auf. Beispielsweise ist die Anzeigeeinheit als ein Touchscreen oder Touchpanel ausgebildet, wobei auf dem Touchscreen und/oder dem Touchpanel das erste Überwachungsbild und/oder das zweite Überwachungsbild anzeigbar ist und direkt der Grenzgegenstandsbereich und/oder die Grenzgegenstandsweite eingebbar und/oder festlegbar ist. Das Eingabemodul ist vorzugsweise ausgebildet, dass ein Benutzer der Steuereinrichtung die Grenzgegenstandsweite grafisch im angezeigten ersten Überwachungsbild und/oder grafisch im zweiten Überwachungsbild festlegen kann und/oder einstellen kann. Beispielsweise kann der Benutzer den Grenzgegenstandsbereich und/oder die Grenzgegenstandsweite optisch im ersten Überwachungsbild und/oder im zweiten Überwachungsbild auswählen und festlegen. Dieser Ausgestaltung liegt die Überlegung zugrunde, eine intuitiv steuerbare und/oder einstellbare Steuereinrichtung bereitzustellen.

Besonders bevorzugt ist es, dass das Eingabemodul ausgebildet ist, dass der Benutzer den Grenzgegenstandsbereich und/oder die Grenzgegenstandsweite durch Auswahl einer linienförmigen Grenze im ersten Überwachungsbild und/oder im zweiten Überwachungsbild festlegen kann. Beispielsweise wählt der Benutzer dazu im ersten Überwachungsbild und/oder im zweiten Überwachungsbild eine Linie aus, wobei die Linie den auflösungsstarken und den auflösungsschwachen Bereich trennt. Alternativ und/oder ergänzend ist das Eingabemodul ausgebildet, dass der Benutzer den Grenzgegenstandsbereich und/oder die Grenzgegenstandsweite durch Auswahl eines flächigen Bereichs und/oder Abschnitts im ersten Überwachungsbild und/oder im zweiten Überwachungsbild festlegen kann. Beispielsweise legt der Benutzer dazu einen flächigen Abschnitt im Überwachungsbild fest, wobei der festgelegte Abschnitt beispielsweise der auflösungsstarke und/oder der auflösungsschwache Bereich sein kann.

In einer möglichen Ausgestaltung der Erfindung ist es vorgesehen, dass das Eingabemodul ausgebildet ist, dass der Benutzer den auflösungsstarken Abschnitt manuell beschneiden kann. Beispielsweise schlägt die Steuereinrichtung einen auflösungsstarken Abschnitt vor, wobei dieser Abschnitt grafisch im angezeigten Überwachungsbild und/oder im angezeigten reduzierten Bild grafisch dargestellt wird. Befindet der Benutzer, dass der auflösungsstarke Bereich zu groß gewählt ist und/oder dieser reduziert werden kann, so ist es möglich, dass der Benutzer den auflösungsstarken Bereich beschneidet und manuell auswählt, welche Bereiche des ursprünglich auflösungsstarken Bereiches wegfallen sollen und zu einem auflösungsschwachen Abschnitt werden sollen. Dieser Ausgestaltung liegt die Überlegung zugrunde, dass ein Benutzer die Rechenleistung basierend auf menschlichen Information noch weiter reduzieren kann.

Besonders bevorzugt ist es, dass die Reduzierung des ersten Überwachungsbildes zum ersten reduzierten Bild auf einem ersten Grenzgegenstandsbereich basiert, wobei die Reduzierung des zweiten Überwachungsbildes zum zweiten reduzierten Bild auf einem zweiten Grenzgegenstandsbereich basiert. Vorzugsweise sind erster Grenzgegenstandsbereich und zweiter Grenzgegenstandsbereich identisch. Alternativ ist der erste Grenzgegenstandsbereich ein anderer als der zweite Grenzgegenstandsbereich, beispielsweise ist die erste Grenzgegenstandsweite größer als die zweite Grenzgegenstandsweite. Insbesondere ist es möglich, dass erster Grenzgegenstandsbereich und zweiter Grenzgegenstandsbereich synchronisiert und/oder gekoppelt sind, beispielsweise verändert sich erste Grenzgegenstandsweite proportional oder indirekt proportional zur zweiten Grenzgegenstandsweite.

In einer besonders bevorzugten Ausgestaltung der Erfindung ist die Auflösung des auflösungsstarken Abschnitts mindestens doppelt so groß wie die Auflösung des auflösungsschwachen Abschnitts. Alternativ und/oder ergänzend ist die Auflösung des auflösungsstarken Abschnitts mindestens drei Mal, im Speziellen mindestens vier Mal so groß wie die Auflösung des auflösungsschwachen Abschnitts.

In einer möglichen Ausgestaltung der Erfindung weist das erste reduzierte Bild eine Mehrzahl an Abschnitten auf und das zweite reduzierte Bild weist ebenfalls eine Mehrzahl an Abschnitten auf, wobei die Abschnitte jeweils unterschiedliche Auflösungen aufweisen. Das Verarbeitungsmodul ist insbesondere ausgebildet, die Auflösung der unterschiedlichen Abschnitte so festzulegen, dass der Quotient aus Auflösung und Gegenstandsweite einen festlegbaren und/oder festgelegten Grenzwert nicht unterschreitet. Dieser Ausgestaltung liegt die Überlegung zugrunde, dass die Genauigkeit der Messung in einem Bild proportional zum Verhältnis aus verwendeter Bildauflösung und Entfernung des Objekts zur Kamera ist. Diese Ausgestaltung legt damit eine Mindestgenauigkeit für Abschnitte der reduzierten Bilder fest, wobei die Genauigkeit nicht unterschritten werden darf.

In einer möglichen Ausgestaltung der Erfindung ist das Auswertemodul ausgebildet, basierend auf dem ersten reduzierten Bild und dem zweiten reduzierten Bild ein stereoskopisches Bild des Überwachungsbereichs bereitzustellen. Insbesondere ist das Auswertemodul ausgebildet, ein dreidimensionales Modell und/oder ein 3D-Bild des abgebildeten Überwachungsbereichs basierend auf dem ersten reduzierten Bild und dem zweiten reduzierten Bild bereitzustellen. Das stereoskopische Bild umfasst insbesondere Abstände und/oder Entfernungen zwischen Objekten des abgebildeten Überwachungsbereichs und/oder zwischen Kameraeinheit und abgebildeten Objekten des Überwachungsbereichs.

Besonders bevorzugt ist es, dass die erste Kameraeinheit ausgebildet ist, ein erstes Testbild aufzunehmen, wobei die zweite Kameraeinheit ausgebildet ist, ein zweites Testbild aufzunehmen. Das erste Testbild und das zweite Testbild weisen insbesondere einen Überlapp auf, wobei dieser Überlapp einen gleichen Bereich des Überwachungsbereichs zeigt. Das Verarbeitungsmodul ist insbesondere ausgebildet, basierend auf dem ersten Testbild und auf dem zweiten Testbild Gegenstandsweiten zu schätzen, wobei die Gegenstandsweiten geschätzte Gegenstandsweiten zwischen Objekten des Überwachungsbereichs und der Kameraeinheit sind. Vorzugsweise ist das Verarbeitungsmodul ausgebildet, die Bereiche des auflösungsstarken Abschnitts und/oder auflösungsschwachen Abschnitts im reduzierten Bild abzuschätzen. Beispielsweise schätzt das Verarbeitungsmodul, in welchen Bereichen und/oder Abschnitten die auflösungsschwachen Abschnitte liegen, insbesondere welche Abschnitte des Überwachungsbildes zu reduzieren sind, um das reduzierte Bild zu erhalten. Dieser Ausgestaltung liegt die Überlegung zugrunde, eine Steuereinrichtung bereitzustellen, welche eine einfache Initialisierung gewährleistet.

Einen weiteren Gegenstand der Erfindung bildet eine Kameraanordnung. Die Kameraanordnung umfasst die Kameravorrichtung und die Steuereinrichtung nach einem der Ansprüche und/oder wie in der Beschreibung vorher beschrieben. Die Kameravorrichtung und die Steuereinrichtung sind insbesondere datentechnisch verbunden, wobei die Kameravorrichtung der Steuereinrichtung das erste Überwachungsbild und das zweite Überwachungsbild datentechnisch bereitstellt. Diesem Gegenstand der Erfindung liegt die Überlegung zugrunde, eine kompatible Einheit aus Kameravorrichtung und Steuereinrichtung bereitzustellen, welche die stereoskopische Auswertung eines Überwachungsbereichs ermöglicht.

Einen weiteren Gegenstand der Erfindung bildet ein Verfahren zur stereoskopischen Aufnahme und/oder stereoskopischen Überwachung eines Überwachungsbereichs. Das Verfahren ist insbesondere zur stereoskopischen Aufnahme des Überwachungsbereichs mit der vorher beschriebenen Kameraanordnung. Mittels einer ersten Kameraeinheit wird ein erstes Überwachungsbild des Überwachungsbereichs aufgenommen, wobei mittels der zweiten Kameraeinheit ein zweites Überwachungsbild des Überwachungsbereichs aufgenommen wird. Erstes Überwachungsbild und zweites Überwachungsbild weisen vorzugsweise einen Überlapp auf. Der Abstand zwischen Kameraeinheit und einem Objekt im Überwachungsbereich wird jeweils als Gegenstandsweite bezeichnet. Das Verfahren sieht vor, dass das erste Überwachungsbild zu einem ersten reduzierten Bild verarbeitet wird und dass das zweite Überwachungsbild zu einem zweiten reduzierten Bild verarbeitet wird. Das erste reduzierte Bild und das zweite reduzierte Bild weisen jeweils einen auflösungsstarken und einen auflösungsschwachen Abschnitt auf. Der auflösungsstarke Abschnitt ist jeweils ein Abschnitt, der einen Fernbereich des Überwachungsbereichs zeigt, wobei der auflösungsschwache Abschnitt ein Bereich ist, der einen Nahbereich des Überwachungsbereichs zeigt. Erfindungsgemäß sieht das Verfahren vor, dass der Überwachungsbereich basierend auf dem ersten reduzierten Bild und dem zweiten reduzierten Bild stereoskopisch ausgewertet und/oder überwacht wird. Die stereoskopische Auswertung und/oder Überwachung ist beispielsweise die Erstellung eines dreidimensionalen Bildes und/oder Modells des abgebildeten Überwachungsbereichs. Ferner ist die stereoskopische Auswertung beispielsweise eine Bestimmung von Abständen von Objekten im Überwachungsbereich.

Weitere Merkmale, Vorteile und Wirkungen der Erfindung ergeben sich aus der nachfolgenden Beschreibung sowie den beigefügten Figuren. Dabei zeigen:
Figur 1 ein Ausführungsbeispiel einer Kameraanordnung;
Figur 2 eine Draufsicht auf den Überwachungsbereich und die Kameravorrichtung;
Figur 3 ein reduziertes Bild des Überwachungsbereichs.

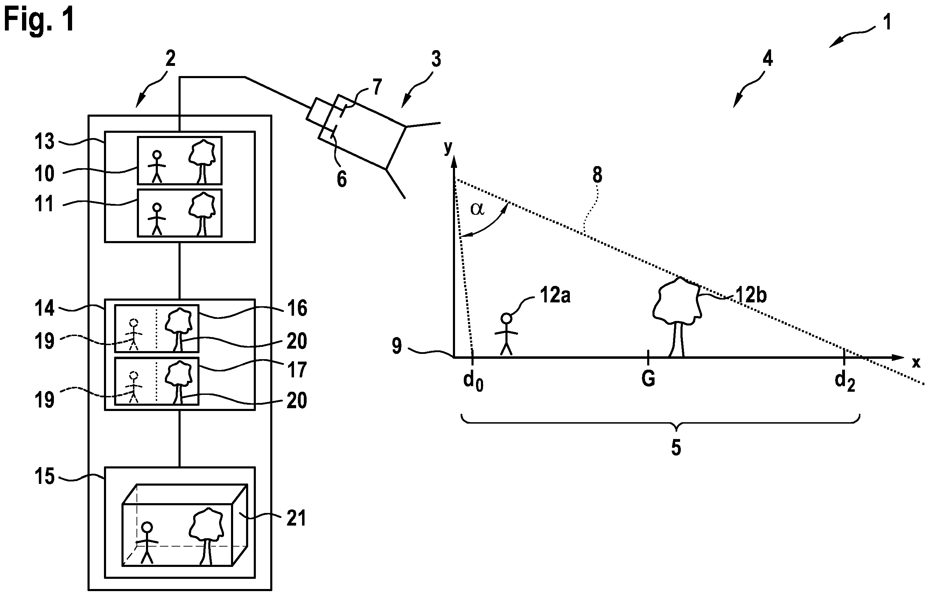

Figur 1 zeigt schematisch eine Kameraanordnung 1. Die Kameraanordnung 1 umfasst eine Steuereinrichtung 2 und eine Kameravorrichtung 3.

Die Kameravorrichtung 3 ist in einem Überwachungsgebiet 4 angeordnet. Die Kameravorrichtung 3 ist zur Überwachung eines Überwachungsbereichs 5 ausgebildet, wobei der Überwachungsbereich 5 ein Teilbereich des Überwachungsgebietes 4 ist. Das Überwachungsgebiet 4 ist beispielsweise eine Freifläche oder ein Innenbereich, wie beispielsweise ein Flughafengebäude.

Die Kameravorrichtung 3 umfasst eine erste Kameraeinheit 6 und eine zweite Kameraeinheit 7. Erste Kameraeinheit 6 und zweite Kameraeinheit 7 sind als bildgebende Sensoren, beispielsweise als CCD-Sensoren oder CMOS-Sensoren ausgebildet. Die Kameravorrichtung weist ein Sichtfeld 8 auf, wobei das Sichtfeld 8 einen Öffnungswinkel α in der XY-Ebene aufweist. Dazu ist hilfsweise ein Koordinatensystem 9 eingezeichnet. Y-Richtung des Koordinatensystems 9 ist insbesondere die Höhenrichtung. Der Öffnungswinkel α des Sichtfeldes 8 ist insbesondere größer als fünfzig Grad und im Speziellen größer als siebzig Grad. In diesem Ausführungsbeispiel ist der Öffnungswinkel α sechzig Grad.

Die Kameravorrichtung 3 ist zur Aufnahme von Überwachungsbildern 10, 11 des Überwachungsbereichs 5 ausgebildet. Dabei ist die erste Kameraeinheit 6 ausgebildet, ein erstes Überwachungsbild 10 des Überwachungsbereichs 5 aufzunehmen. Die zweite Kameraeinheit 7 ist zur Aufnahme eines zweiten Überwachungsbildes 11 des Überwachungsbereichs 5 ausgebildet. Insbesondere bilden erstes Überwachungsbild 10 und zweites Überwachungsbild 11 einen gemeinsamen Bereich des Überwachungsbereichs 5 ab. Um basierend auf dem ersten Überwachungsbild 10 und dem zweiten Überwachungsbild 11 eine stereoskopische Auswertung des Überwachungsbereichs 5 durchführen zu können, sind erste Kameraeinheit 6 und zweite Kameraeinheit 7 voneinander beabstandet angeordnet. Insbesondere sind erste Kameraeinheit 6 und zweite Kameraeinheit 7 innerhalb der Bildebene der Kameravorrichtung 3 beabstandet.

Im Überwachungsbereich 5 sind Objekte 12a und 12b angeordnet. Beispielsweise handelt es sich bei dem Objekt 12a um einen Menschen und bei dem Objekt 12b um einen Baum. Der Mensch als Objekt 12a befindet sich näher an der Kameravorrichtung 3 als das Objekt 12b. Der Abstand zwischen einem Objekt 12a, 12b und der Kameravorrichtung 3 wird als Gegenstandsweite d aufgefasst, wobei die Gegenstandsweite des Objektes 12a Da ist und die Gegenstandsweite des Objekts 12b d_{b} ist. Insbesondere wird der Überwachungsbereich 5 in Abschnitte geteilt, wobei die Abschnitte des Überwachungsbereichs 5 ebenfalls Gegenstandsweiten aufweisen. Beispielsweise entspricht der Gegenstandsweite d₀ der Punkt des Überwachungsbereichs 5, der zur Kameravorrichtung 3 am nächstgelegenen ist, wobei die Gegenstandsweite d₂ der Gegenstandsweite d entspricht, die von der Kameravorrichtung 3 am weitesten entfernt ist. Für die Kameraanordnung 1 ist eine Grenzgegenstandsbereich G festlegbar, wobei in diesem Ausführungsbeispiel der Grenzgegenstandsbereich eine linienförmige Grenzgegenstandsweite G ist. In diesem Ausführungsbeispiel befindet sich die Grenzgegenstandsweite G in der Mitte zwischen den Gegenstandsweiten d₀ und d₂.

Die Steuereinrichtung 2 ist beispielsweise als eine Rechnereinheit ausgebildet. Alternativ ist die Steuereinrichtung 2 eine Prozessoreinrichtung oder ein Mikrocontroller. Die Steuereinrichtung 2 umfasst ein Speichermodul 13, ein Verarbeitungsmodul 14 und ein Auswertemodul 15. Die Steuereinrichtung 2 ist datentechnisch mit der Kameravorrichtung 3 verbunden. Die datentechnische Verbindung von Kameravorrichtung 3 und Steuereinrichtung 2 ist beispielsweise eine kabelgebundene Verbindung, alternativ ist die datentechnische Verbindung eine Funkverbindung. Der Steuereinrichtung 2 werden die Überwachungsbilder 10 und 11 datentechnisch bereitgestellt. In dem Speichermodul 13 wird das erste Überwachungsbild 10 und das zweite Überwachungsbild 11 gespeichert. Das erste Überwachungsbild 10 sowie das zweite Überwachungsbild 11 weisen jeweils eine Überwachungsbildauslösung auf.

Das Verarbeitungsmodul 14 ist ausgebildet, das erste Überwachungsbild 10 zu einem ersten reduzierten Bild 16 zu bearbeiten, wobei diese Bearbeitung mindestens eine teilweise Auflösungsreduktion umfasst. Ferner ist das Verarbeitungsmodul 14 ausgebildet, das zweite Überwachungsbild 11 in ein zweites reduziertes Bild 17 zu bearbeiten, wobei diese Bearbeitung einer mindestens teilweisen Auflösungsreduktion entspricht. Das Verarbeitungsmodul 14 ist dabei ausgebildet, Bereiche des ersten Überwachungsbildes 10, welche Bereiche des Überwachungsbereichs 5 abbilden, welche weiter entfernt sind als die Grenzgegenstandsweite G, in einer ersten Auflösung darzustellen, wobei Bereiche des ersten Überwachungsbildes 10, welche Bereiche des Überwachungsbereichs 5 zeigen, die näher an der Kameravorrichtung 3 sind als die Grenzgegenstandsweite G, in einer zweiten Auflösung darzustellen. Insbesondere ist die erste Auflösung eine höhere Auflösung als die zweite Auflösung. Dabei werden im reduzierten Bild 16 Bereiche des Überwachungsbereichs 5, die näher an der Kameravorrichtung 3 als die Grenzgegenstandsweite G liegen, mit einer reduzierten Auflösung dargestellt, wobei weiter entfernt liegende Bereiche des Überwachungsbereichs 5 mit einer größeren Auflösung dargestellt werden. Das erste reduzierte Bild 16 weist damit einen auflösungsschwachen Abschnitt 19 auf und einen auflösungsstarken Abschnitt 20. Insbesondere ist die Auflösung des auflösungsstarken Abschnitts 20 mindestens doppelt so groß wie die Auflösung des auflösungsschwachen Abschnitts 19.

Ferner ist das Verarbeitungsmodul 14 ausgebildet, das zweite Überwachungsbild 11 so zu reduzieren, dass Bereiche des Überwachungsbereichs 5, welche weiter entfernt sind als die Grenzgegenstandsweite G, mit einer höheren Auflösung dargestellt werden als Bereiche des Überwachungsbereichs 5, die näher an der Kameravorrichtung 3 sind als die Grenzgegenstandsweite G. Somit weist ebenfalls das zweite reduzierte Bild 17 einen auflösungsschwachen Abschnitt 19 und einen auflösungsstarken Abschnitt 20 auf.

Das Auswertemodul 15 erhält von dem Verarbeitungsmodul 14 das erste reduzierte Bild 16 und das zweite reduzierte Bild 17 bereitgestellt. Das Auswertemodul 15 ist ausgebildet, basierend auf dem ersten reduzierten Bild 16 und dem zweiten reduzierten Bild 17 den Überwachungsbereich 5 stereoskopisch auszuwerten und ein 3D-Modell 21 des Überwachungsbereiches 5 basierend auf dem ersten reduzierten Bild 16 und dem zweiten reduzierten Bild 17 zu erstellen. Mittels des 3D-Modells 21 ist es möglich, Abstände zwischen den Objekten 12a und 12b zu bestimmen.

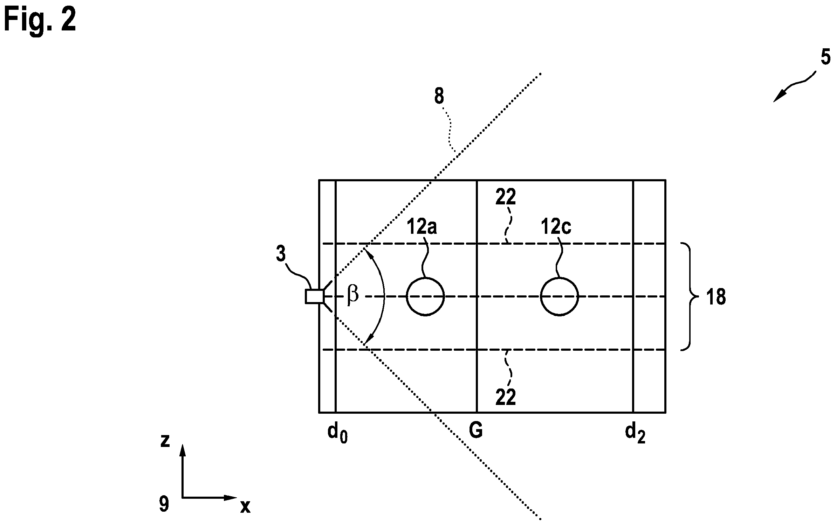

Figur 2 zeigt eine Draufsicht von oben auf das Überwachungsgebiet 4. Ferner ist in dieser Draufsicht die Kameravorrichtung 3 mit ihrem Sichtfeld 8 gezeigt. Die Draufsicht von oben entspricht insbesondere einer Ansicht auf die XZ-Ebene, wobei zur Verdeutlichung das Hilfskoordinatensystem 9 mit den Achsen X und Z gezeigt ist. Die Z-Achse steht insbesondere senkrecht auf der X-Achse und auf der Y-Achse, wobei das Koordinatensystem 9 ein kartesisches Koordinatensystem bildet. Der Öffnungswinkel β des Sichtfelds 8 in der XZ-Ebene ist hier neunzig Grad. Insbesondere ist der Winkel β, der das Sichtfeld 8 in der XZ-Ebene aufspannt, größer als siebzig Grad und im Speziellen kleiner als einhundertzwanzig Grad. Die Kameravorrichtung 3, insbesondere die erste Kameraeinheit 6 und die zweite Kameraeinheit 7, bildet den Überwachungsbereich 5 ab. Im Überwachungsgebiet 4 und im Überwachungsbereich 5 sind die Gegenstandsweiten d₀ und d₂ sowie die Grenzgegenstandsweite G als Linien parallel zur Z-Achse eingezeichnet.

Die Kameravorrichtung 3 ist zur Überwachung eines Flurs 18 Gangs ausgebildet, wobei der Flur 18 im Überwachungsgebiet 4 angeordnet ist und durch Wände 22 begrenzt wird.

Auf dem Flur 18 im Sichtfeld 8 der Kameravorrichtung 3 befinden sich eine erste Person 12a und eine zweite Person12b. Die erste Person 12a weist eine Gegenstandsweite kleiner als die Grenzgegenstandsweite G auf, während die zweite Person 12b eine Gegenstandsweite größer der Grenzgegenstandsweite G aufweist.

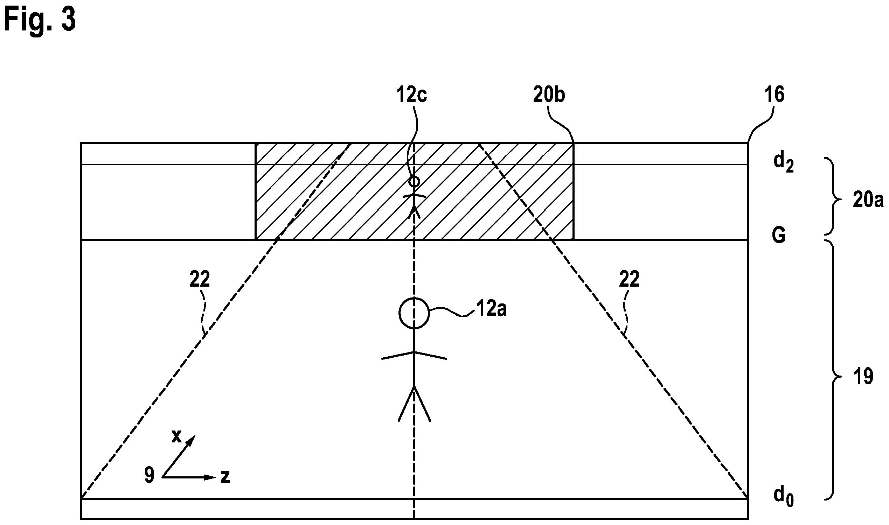

Figur 3 zeigt ein Beispiel für ein reduziertes Bild 16,17 des Überwachungsbereichs 5 aus Figur 2. In dem reduzierten Bild 16 sind die Hilfslinien der Gegenstandsweiten d₀ und d₂ sowie der Grenzgegenstandsweite G eingezeichnet. Aufgrund der Abbildungseigenschaften erscheint die Hilfslinie der Grenzgegenstandsweite G näher an der Gegenstandsweite d₂ zu liegen und die Grenzgegenstandsweite G weiter entfernt von der Gegenstandsweite d₀ zu liegen. Ebenso ist es der Abbildung zuzuschreiben, dass die Wände 22 des Flurs in dem reduzierten Bild als zusammenlaufende Geraden dargestellt sind. Während die erste Person 12a und die zweite Person 12b in der Realität gleich groß sind, werden die erste Person 12a und die zweite Person 12b im reduzierten Bild 16 unterschiedlich groß abgebildet, wobei die Person 12a mit der geringeren Gegenstandsweite größer erscheint als die weiter enternde zweite Person 12b.

Hilfsweise ist das Koordinatensystem 9 in das reduzierte Bild 16 eingezeichnet. Der Bereich des reduzierten Bildes 16 zwischen der Grenzgegenstandsweite G und der Gegenstandsweite d₀ ist der auflösungsschwache Abschnitt 19, der eine geringere Auflösung aufweist als der auflösungsstarke Abschnitt 20. Die Figur zeigt schraffiert den eigentlichen auflösungsstarken Abschnitt 20, welcher zwischen der Grenzgegenstandsweite G und der Gegenstandsweite d₂ im reduzierten Bild 16 angeordnet ist. Durch den Benutzer ist der eigentliche auflösungsstarke Bereich 20a zu einem beschnittenen auflösungsstarken Abschnitt 20b beschneidbar. In diesem Ausführungsbeispiel ist der beschnittene auflösungsstarke Abschnitt 20b der Bereich des eigentlichen auflösungsstarken Abschnitt 20a, welcher im Bereich des Flurs 18 liegt beziehungsweise der Bereich des auflösungsstarken Abschnitt 20, der die Wände 22 des Flurs umfasst.

## Patentansprüche

1. Steuereinrichtung (2) für eine Kameravorrichtung (3) zur stereoskopischen Aufnahme eines Überwachungsbereichs (5) mit Objekten (12a, 12b),
wobei die Kameravorrichtung (3) eine erste Kameraeinheit (6) und eine zweite Kameraeinheit (7) umfasst, wobei die erste Kameraeinheit (6) ausgebildet ist, ein erstes Überwachungsbild (10) des Überwachungsbereichs (5) aufzunehmen, wobei die zweite Kameraeinheit (7) ausgebildet ist, ein zweites Überwachungsbild (11) des Überwachungsbereichs (5) aufzunehmen,
wobei die Kameravorrichtung (3) ausgebildet ist, das erste Überwachungsbild (10) und das zweite Überwachungsbild (11) der Steuereinrichtung (2) bereitzustellen,
wobei der Abstand zwischen Kameraeinheit (6) und Objekt (12a, 12b) des Überwachungsbereichs (5) jeweils als Gegenstandsweite bezeichnet wird,
mit einem Verarbeitungsmodul (14), wobei das Verarbeitungsmodul (14) mindestens einen Grenzgegenstandsbereich aufweist und ausgebildet ist, das erste Überwachungsbild (10) zu einem ersten reduzierten Bild (16) zu verarbeiten und das zweite Überwachungsbild (11) zu einem zweiten reduzierten Bild (17) zu verarbeiten,
wobei das erste reduzierte Bild (16) und das zweite reduzierte Bild (17) jeweils einen auflösungsstarken Abschnitt (20) und einen auflösungsschwachen Abschnitt (19) aufweisen,
wobei der auflösungsstarke Abschnitt (20) jeweils ein Abschnitt ist, der einen Fernbereich des Überwachungsbereichs (5) zeigt, wobei der Fernbereich ein Bereich des Überwachungsbereich (5) ist, der weiter entfernt von der Kameravorrichtung (3) ist als der Grenzgegenstandsbereich,
wobei der auflösungsschwache Abschnitt (19) ein Abschnitt ist, der einen Nahbereich des Überwachungsbereichs (5) zeigt, wobei der Nahbereich ein Bereich des Überwachungsbereich (5) ist, der näher an der Kameravorrichtung (3) ist als der Grenzgegenstandsbereich,
mit einem Auswertemodul (15) zur stereoskopischen Auswertung des Überwachungsbereichs (5) basierend auf dem ersten reduzierten Bild (16) und dem zweiten reduzierten Bild (17).

2. Steuereinrichtung (2) nach Anspruch 1, **gekennzeichnet durch** ein Eingabemodul zur Eingabe des Grenzgegenstandsbereich.

3. Steuereinrichtung (2) nach Anspruch 2, **dadurch gekennzeichnet, dass** das Eingabemodul eine Anzeigeeinheit zur Anzeige des ersten Überwachungsbildes (10) und/oder des zweiten Überwachungsbildes (11) aufweist, wobei das Eingabemodul ausgebildet ist, dass ein Benutzer den Grenzgegenstandsbereich graphisch im angezeigten ersten Überwachungsbild (10) und/oder zweiten Überwachungsbild (11) festlegen kann.

4. Steuereinrichtung (2) nach Anspruch 2 oder 3, **dadurch gekennzeichnet, dass** das Eingabemodul ausgebildet ist, dass der Benutzer den Grenzgegenstandsbereich durch Auswahl einer linienförmigen Grenze oder eines flächigen Abschnitts im ersten Überwachungsbild (10) und/oder zweiten Überwachungsbild (11) festlegen kann.

5. Steuereinrichtung (2) nach einem der vorherigen Ansprüche, **dadurch gekennzeichnet, dass** das Eingabemodul ausgebildet ist, dass der Benutzer den auflösungsstarken Abschnitt (20) manuell beschneiden kann.

6. Steuereinrichtung (2) nach einem der vorherigen Ansprüche, **dadurch gekennzeichnet, dass** das Verarbeitungsmodul (14) einen ersten Grenzgegenstandsbereich und einen zweiten Grenzgegenstandsbereich aufweist, wobei die Reduzierung des ersten Überwachungsbildes (10) zum ersten reduzierten Bild (16) auf dem ersten Grenzgegenstandsbereich basiert und die Reduzierung des zweiten Überwachungsbildes (11) zum zweiten reduzierten Bild (17) auf dem zweiten Grenzgegenstandsbereich basiert.

7. Steuereinrichtung (2) nach einem der vorherigen Ansprüche, **dadurch gekennzeichnet, dass** die Auflösung des auflösungsstarken Abschnitts (20) mindestens doppelt so groß ist wie die Auflösung des auflösungsschwachen Abschnitts (19).

8. Steuereinrichtung (2) nach einem der vorherigen Ansprüche, **dadurch gekennzeichnet, dass** das erste reduzierte Bild (16) und das zweite reduzierte Bild (17) jeweils eine Mehrzahl Abschnitte aufweist, wobei die Abschnitte unterschiedliche Auflösungen aufweisen, wobei das Verarbeitungsmodul (14) ausgebildet ist, die Auflösung der Abschnitte so festzulegen, dass der Quotient aus Auflösung und minimalem oder maximalem Abstand des Gegenstandsbereichs einen festlegbaren Grenzwert nicht unterschreitet.

9. Steuereinrichtung (2) nach einem der vorherigen Ansprüche, **dadurch gekennzeichnet, dass** das Auswertemodul (14) ausgebildet ist, basierend auf dem ersten reduzierten Bild (16) und dem zweiten reduzierten Bild (17) ein stereoskopisches Bild des abgebildeten Überwachungsbereichs (5) bereitzustellen.

10. Steuereinrichtung (2) nach einem der vorherigen Ansprüche, **dadurch gekennzeichnet, dass** die erste Kameraeinheit (6) ausgebildet ist ein erstes Testbild aufzunehmen und die zweite Kameraeinheit (7) ein zweites Testbild aufzunehmen, wobei erstes Testbild und zweites Testbild jeweils eine Testauflösung aufweisen und den Überwachungsbereich (5) zeigen,
wobei das Verarbeitungsmodul (14) ausgebildet ist, basierend auf dem ersten Testbild und dem zweiten Testbild Gegenstandsweiten zu schätzen und die Bereiche des auflösungsstarken Abschnitts (20) und/oder auflösungsschwachen Abschnitts (19) in den reduzierten Bildern (16, 17) abzuschätzen.

11. Kameraanordnung (1) umfassend die Kameravorrichtung (3) und die Steuereinrichtung (2) nach einem der vorherigen Ansprüche, wobei die Kameravorrichtung (3) und die Steuereinrichtung (2) datentechnisch verbunden sind.

12. Verfahren zur stereoskopischen Aufnahme eines Überwachungsbereichs (5), insbesondere mit der Kameraanordnung (1) nach Anspruch 11, wobei mittels einer ersten Kameraeinheit (6) ein erstes Überwachungsbild (10) und mittels einer zweiten Kameraeinheit (7) ein zweites Überwachungsbild (11) aufgenommen wird, wobei das erste Überwachungsbild (10) und das zweite Überwachungsbild (11) den Überwachungsbereich (5) zeigen, wobei der Abstand zwischen Kameraeinheit (6, 7) und einem Objekt (12a, 12b) des Überwachungsbereichs (5) jeweils als Gegenstandsweite bezeichnet wird, wobei das erste Überwachungsbild (10) zu einem ersten reduzierten Bild (16) verarbeitet wird und das zweite Überwachungsbild (11) zu einem zweiten reduzierten Bild (17) verarbeitet wird, wobei das erste reduzierte Bild (16) und das zweite reduzierte Bild (17) jeweils einen auflösungsstarken Abschnitt (20) und einen auflösungsschwachen Abschnitt (19) aufweisen, wobei der auflösungsstarke Abschnitt (20) jeweils ein Abschnitt ist, der einen Fernbereich des Überwachungsbereichs (5) zeigt, wobei der Fernbereich ein Bereich des Überwachungsbereich (5) ist, der weiter entfernt ist als ein Grenzgegenstandsbereich , wobei der auflösungsschwache Abschnitt (19) ein Abschnitt ist, der einen Nahbereich des Überwachungsbereichs (5) zeigt, wobei der Nahbereich ein Bereich des Überwachungsbereich (5) ist, der näher an der Kameravorrichtung (3) ist als der Grenzgegenstandsbereich,
wobei der Überwachungsbereich (5) basierend auf dem ersten reduzierten Bild (16) und dem zweiten reduzierten Bild (17) stereoskopisch ausgewertet wird.

## Claims

1. Controller (2) for a camera device (3) for stereoscopically recording a monitoring area (5) containing objects (12a, 12b),
wherein the camera device (3) comprises a first camera unit (6) and a second camera unit (7), wherein the first camera unit (6) is designed to record a first monitoring image (10) of the monitoring area (5), wherein the second camera unit (7) is designed to record a second monitoring image (11) of the monitoring area (5),
wherein the camera device (3) is designed to provide the first monitoring image (10) and the second monitoring image (11) to the controller (2),
wherein the distance between the camera unit (6) and the object (12a, 12b) in the monitoring area (5) is in each case referred to as object distance,
having a processing module (14), wherein the processing module (14) has at least one limit object area and is designed to process the first monitoring image (10) so as to form a first reduced image (16) and to process the second monitoring image (11) so as to form a second reduced image (17),
wherein the first reduced image (16) and the second reduced image (17) each have a high-resolution section (20) and a low-resolution section (19),
wherein the high-resolution section (20) is in each case a section that shows a remote area of the monitoring area (5), wherein the remote area is an area of the monitoring area (5) that is further away from the camera device (3) than the limit object area, wherein the low-resolution section (19) is a section that shows a near area of the monitoring area (5), wherein the near area is an area of the monitoring area (5) that is closer to the camera device (3) than the limit object area,
having an evaluation module (15) for stereoscopically recording the monitoring area (5) based on the first reduced image (16) and the second reduced image (17).

2. Controller (2) according to Claim 1, **characterized by** an input module for inputting the limit object area.

3. Controller (2) according to Claim 2, **characterized in that** the input module has a display unit for displaying the first monitoring image (10) and/or the second monitoring image (11), wherein the input module is designed such that a user is able to graphically define the limit object area in the displayed first monitoring image (10) and/or second monitoring image (11) .

4. Controller (2) according to Claim 2 or 3, **characterized in that** the input module is designed such that the user is able to define the limit object area by selecting a linear boundary or a flat section in the first monitoring image (10) and/or second monitoring image (11).

5. Controller (2) according to one of the preceding claims, **characterized in that** the input module is designed such that the user is able to manually crop the high-resolution section (20).

6. Controller (2) according to one of the preceding claims, **characterized in that** the processing module (14) has a first limit object area and a second limit object area,
wherein the reduction of the first monitoring image (10) so as to form the first reduced image (16) is based on the first limit object area and the reduction of the second monitoring image (11) so as to form the second reduced image (17) is based on the second limit object area.

7. Controller (2) according to one of the preceding claims, **characterized in that** the resolution of the high-resolution section (20) is at least twice as great as the resolution of the low-resolution section (19).

8. Controller (2) according to one of the preceding claims, **characterized in that** the first reduced image (16) and the second reduced image (17) each have a multiplicity of sections, wherein the sections have different resolutions, wherein the processing module (14) is designed to define the resolution of the sections such that the ratio of resolution to minimum or maximum distance of the object area does not fall below a definable limit value.

9. Controller (2) according to one of the preceding claims, **characterized in that** the evaluation module (14) is designed to provide a stereoscopic image of the depicted monitoring area (5) based on the first reduced image (16) and the second reduced image (17).

10. Controller (2) according to one of the preceding claims, **characterized in that** the first camera unit (6) is designed to record a first test image and the second camera unit (7) is designed to record a second test image, wherein the first test image and the second test image each have a test resolution and show the monitoring area (5),
wherein the processing module (14) is designed to estimate object distances based on the first test image and the second test image and to estimate the areas of the high-resolution section (20) and/or low-resolution section (19) in the reduced images (16, 17).

11. Camera arrangement (1) comprising the camera device (3) and the controller (2) according to one of the preceding claims, wherein the camera device (3) and the controller (2) have a data connection.

12. Method for stereoscopically recording a monitoring area (5), in particular using the camera arrangement (1) according to Claim 11, wherein a first monitoring image (10) is recorded by way of a first camera unit (6) and a second monitoring image (11) is recorded by way of a second camera unit (7), wherein the first monitoring image (10) and the second monitoring image (11) show the monitoring area (5), wherein the distance between the camera unit (6, 7) and an object (12a, 12b) in the monitoring area (5) is in each case referred to as object distance,
wherein the first monitoring image (10) is processed so as to form a first reduced image (16) and the second monitoring image (11) is processed so as to form a second reduced image (17), wherein the first reduced image (16) and the second reduced image (17) each have a high-resolution section (20) and a low-resolution section (19), wherein the high-resolution section (20) is in each case a section that shows a remote area of the monitoring area (5), wherein the remote area is an area of the monitoring area (5) that is further away than a limit object area, wherein the low-resolution section (19) is a section that shows a near area of the monitoring area (5), wherein the near area is an area of the monitoring area (5) that is closer to the camera device (3) than the limit object area,
wherein the monitoring area (5) is stereoscopically evaluated based on the first reduced image (16) and the second reduced image (17).

## Revendications

1. Moyen de commande (2) destiné à un dispositif de caméra (3) destiné à l'enregistrement stéréoscopique d'une zone de surveillance (5) comprenant des objets (12a, 12b),
le dispositif de caméra (3) comprenant une première unité de caméra (6) et une deuxième unité de caméra (7), la première unité de caméra (6) étant conçue pour enregistrer une première image de surveillance (10) de la zone de surveillance (5), la deuxième unité de caméra (7) étant conçue pour enregistrer une deuxième image de surveillance (11) de la zone de surveillance (5),
le dispositif de caméra (3) étant conçu pour fournir la première image de surveillance (10) et la deuxième image de surveillance (11) au moyen de commande (2),
la distance entre l'unité de caméra (6) et l'objet (12a, 12b) de la zone de surveillance (5) étant appelée distance de l'objet,
le moyen de commande comprenant un module de traitement (14), le module de traitement (14) comportant au moins une zone d'objet limite et étant conçu pour traiter la première image de surveillance (10) afin d'obtenir une première image réduite (16) et pour traiter la deuxième image de surveillance (11) afin d'obtenir une deuxième image réduite (17),
la première image réduite (16) et la deuxième image réduite (17) comportant chacune une portion à haute résolution (20) et une portion à faible résolution (19),
la portion à haute résolution (20) étant à chaque fois une portion qui montre une zone éloignée de la zone de surveillance (5), la zone éloignée étant une zone de la zone de surveillance (5) qui est plus éloignée du dispositif de caméra (3) que la zone d'objet limite,
la portion à faible résolution (19) étant une portion qui montre une zone proche de la zone de surveillance (5), la zone proche étant une zone de la zone de surveillance (5) qui est plus proche du dispositif de caméra (3) que la zone d'objet limite,
le moyen de commande comprenant un module d'évaluation (15) destiné à effectuer une évaluation stéréoscopique de la zone surveillée (5) sur la base de la première image réduite (16) et de la deuxième image réduite (17) .

2. Moyen de commande (2) selon la revendication 1, **caractérisé par** un module d'entrée destiné à entrer la zone d'objet limite.

3. Moyen de commande (2) selon la revendication 2, **caractérisé en ce que** le module d'entrée comporte une unité d'affichage destinée à afficher la première image de surveillance (10) et/ou la deuxième image de surveillance (11), le module d'entrée étant conçu de sorte qu'un utilisateur puisse définir graphiquement la zone d'objet limite dans la première image de surveillance (10) et/ou la deuxième image de surveillance (11) affichées.

4. Moyen de commande (2) selon la revendication 2 ou 3, **caractérisé en ce que** le module d'entrée est conçu de sorte que l'utilisateur puisse définir la zone d'objet limite en sélectionnant une limite linéaire ou une portion sensiblement bidimensionnelle dans la première image de surveillance (10) et/ou la deuxième image de surveillance (11).

5. Moyen de commande (2) selon l'une des revendications précédentes, **caractérisé en ce que** le module d'entrée est conçu de sorte que l'utilisateur puisse rogner manuellement la portion à haute résolution (20).

6. Moyen de commande (2) selon l'une des revendications précédentes, **caractérisé en ce que** le module de traitement (14) comporte une première zone d'objet limite et une deuxième zone d'objet limite, la réduction de la première image de surveillance (10) pour obtenir la première image réduite (16) étant basée sur la première zone d'objet limite et la réduction de la deuxième image de surveillance (11) pour obtenir la deuxième image réduite (17) étant basée sur la deuxième zone d'objet limite.

7. Moyen de commande (2) selon l'une des revendications précédentes, **caractérisé en ce que** la résolution de la portion à haute résolution (20) est au moins deux fois supérieure à la résolution de la portion à faible résolution (19).

8. Moyen de commande (2) selon l'une des revendications précédentes, **caractérisé en ce que** la première image réduite (16) et la deuxième image réduite (17) comportent chacune une pluralité de portions, les portions ayant des résolutions différentes, le module de traitement (14) étant conçu pour déterminer la résolution des portions de sorte que le quotient de la résolution et de la distance minimale ou maximale de la zone d'objet n'est pas inférieur à une valeur limite définissable.

9. Moyen de commande (2) selon l'une des revendications précédentes, **caractérisé en ce que** le module d'évaluation (14) est conçu pour fournir, sur la base de la première image réduite (16) et de la deuxième image réduite (17), une image stéréoscopique de la zone de surveillance (5) reproduite.

10. Moyen de commande (2) selon l'une des revendications précédentes, **caractérisé en ce que** la première unité de caméra (6) est conçue pour enregistrer une première image de test et la deuxième unité de caméra est conçue (7) pour enregistrer une deuxième image de test, la première image de test et la deuxième image de test ayant chacune une résolution de test et montrant la zone de surveillance (5),
le module de traitement (14) étant conçu pour estimer les distances des objets sur la base de la première image de test et de la deuxième image de test et pour estimer les zones de la portion à haute résolution (20) et/ou de la portion à faible résolution (19) dans les images réduites (16, 17).

11. Ensemble de caméra (1) comprenant le dispositif de caméra (3) et le moyen de commande (2) selon l'une des revendications précédentes, le dispositif de caméra (3) et le moyen de commande (2) étant reliés en termes de données.

12. Procédé d'enregistrement stéréoscopique d'une zone de surveillance (5), en particulier au moyen de l'ensemble de caméra (1) selon la revendication 11, une première image de surveillance (10) étant enregistrée au moyen d'une première unité de caméra (6) et une deuxième image de surveillance (11) étant enregistrée au moyen d'une deuxième unité de caméra (7), la première image de surveillance (10) et la deuxième image de surveillance (11) montrant la zone de surveillance (5), la distance entre l'unité de caméra (6, 7) et un objet (12a, 12b) de la zone de surveillance (5) étant appelée distance d'objet,
la première image de surveillance (10) étant traitée pour obtenir une première image réduite (16) et la deuxième image de surveillance (11) étant traitée pour obtenir une deuxième image réduite (17), la première image réduite (16) et la deuxième image réduite (17) comportant chacune une portion à haute résolution (20) et une portion à faible résolution (19), la portion à haute résolution (20) étant à chaque fois une portion montrant une zone éloignée de la zone de surveillance (5), la zone éloignée étant une zone de la zone de surveillance (5) qui est plus éloignée qu'une zone d'objet limite, la portion à faible résolution (19) étant une portion qui montre une zone proche de la zone de surveillance (5), la zone proche étant une zone de la zone de surveillance (5) qui est plus proche du dispositif de caméra (3) que la zone d'objet limite,
la zone de surveillance (5) étant soumise à une évaluation stéréoscopique sur la base de la première image réduite (16) et de la deuxième image réduite (17) .
